# EUROPEAN PATENT APPLICATION

(11) **EP 4 700 924 A1**
(43) Date of publication of application: **25.02.2026**
(21) Application number: 25190950.3
(22) Date of filing: 22.07.2025
(51) Int. Cl.: H01M 50/103, H01M 50/107, H01M 50/119, H01M 50/145, H01M 50/186, H01M 50/188, H01M 50/193, H01M 50/249, H01M 50/414, H01M 50/531, H01M 50/533, H01M 50/571, H01M 50/184, H01M 50/474, H01M 50/477, H01M 50/486, H01M 50/586, H01M 50/593

(54) **SECONDARY BATTERY, BATTERY PACK AND ELECTRONIC APPARATUS**

(30) Priority: 21.08.2024 CN 202422039945 U
(71) Applicant: AESC Japan Ltd., Yokohama-Shi, Kanagawa 220-0012 (JP)
(72) Inventor: CHEN, Xiu, Jiangyin City, Wuxi City, 214443 (CN)
(74) Representative: Becker, Eberhard

(57) **Abstract**

A secondary battery (100) includes a housing (200) including an end wall (111) having a first assembly hole (1110) and a side wall (112) surrounding the end wall; inner plastic (30) contacting surface of the end wall (111) facing an inner portion of the housing (200) and having a second assembly hole (300) corresponding to the first assembly hole (1110); and an electrode terminal (50) including a post portion (51) and an inner flange (52). The post portion (51) passes through the first assembly hole (1110) and the second assembly hole (300). The inner flange (52) is connected to one end of the post portion (51) located inside the housing (200) and clamps the inner plastic (30) together with the end wall (111). In a thickness direction of the inner plastic (30), the inner plastic (30) is provided with a through channel (35) passing through the inner plastic (30) itself.

## Description

### BACKGROUND

### Technical Field

The disclosure relates to a secondary battery, a battery pack, and an electronic apparatus.

### Description of Related Art

Generally, in the field of new energy power batteries, a secondary battery includes an electrode assembly, a housing, a cover plate, etc. The electrode assembly includes a positive terminal sheet, a negative terminal sheet, and a separator located between the positive terminal sheet and the negative terminal sheet. These positive terminal sheet, negative terminal sheet, and separator are stacked together and wound into an electrode assembly, then sealed in the housing. Usually, the inner plastic is arranged between the electrode assembly and the end wall of the housing, so as to prevent the electrode assembly from moving and provide the function of insulating.

### SUMMARY

In view of the problems found in the related art, the disclosure aims to provide a secondary battery, a battery pack, and an electronic apparatus to at least improve the safety of the secondary battery.

To achieve the above, the disclosure provides a secondary battery including a housing, inner plastic, and an electrode terminal. The housing includes an end wall and a side wall surrounding the end wall, and the end wall has a first assembly hole. The inner plastic is in contact with a surface of the end wall facing an inner portion of the housing and has a second assembly hole corresponding to the first assembly hole. The electrode terminal includes a post portion and an inner flange. The post portion passes through the first assembly hole and the second assembly hole, and the inner flange is connected to one end of the post portion located inside the housing and clamps the inner plastic together with the end wall. In a thickness direction of the inner plastic, the inner plastic is provided with a through channel passing through the inner plastic itself.

In some embodiments, a surface of the inner plastic facing the end wall includes a recessed portion that is recessed toward the inner portion of the housing, and the through channel passes through the recessed portion.

In some embodiments, a surface of the inner plastic away from the end wall has a reinforcing rib arranged around the second assembly hole, and the through channel is arranged on the reinforcing rib.

In some embodiments, the through channel includes a plurality of through holes arranged on the reinforcing rib. The inner plastic further includes a non-penetrating plastic inlet hole arranged on the reinforcing rib, and a distance between each through hole and the plastic inlet hole is greater than 0.5 mm.

In some embodiments, the secondary battery further includes an electrode assembly located in the housing, and a first tab of the electrode assembly faces the inner plastic. The first tab includes a plurality of independently bendable conductive sheets, and the plurality of conductive sheets are all bent toward an axis of the electrode assembly. The through channel is a through hole having a first diameter facing a side of the electrode assembly and a second diameter facing a side of the end wall. The first diameter is less than the second diameter. The first diameter is less than a width of any one of the conductive sheets at one end close to the axis of the electrode assembly.

In some embodiments, the secondary battery further includes an electrode assembly and a current-collecting plate located in the housing. The current-collecting plate is located between the electrode assembly and the inner plastic. The current-collecting plate is connected to the electrode terminal and a first tab of the electrode assembly. The current-collecting plate has a weight-reducing hole. Projected in a thickness direction of the inner plastic, the through channel of the inner plastic is misaligned with the weight-reducing hole.

In some embodiments, a surface of the inner plastic away from the end wall has a first reinforcing rib surrounding the second assembly hole, a second reinforcing rib surrounding the first reinforcing rib, and a third reinforcing rib communicating with the first reinforcing rib and the second reinforcing rib. The through channel includes a plurality of slots that pass through both the first reinforcing rib and the second reinforcing rib.

In some embodiments, the through channel of the secondary battery includes a plurality of first through holes surrounding the second assembly hole and a plurality of second through holes surrounding the plurality of first through holes. A diameter of the first through holes is different from a diameter of the second through holes.

The embodiments of the disclosure further provide a battery pack including the secondary battery according to any one of the above.

The embodiments of the disclosure further provide an electronic apparatus including the battery pack.

The beneficial technical effects provided by the disclosure include the following.

In the embodiment of the disclosure, the inner plastic is provided with the through channel that passes from the top surface of the inner plastic to the bottom surface. When the inner plastic is deformed due to compression from the inner flange of the electrode terminal and the housing, the through channel discharges the electrolyte located between the inner plastic and the housing in a timely manner. In this way, the electrolyte is prevented from accumulating between the inner plastic and the housing, generating liquid phase corrosion, leading to blackening or rusting in the inner portion of the housing, and reducing the strength of the housing. The safety of the secondary battery is thus improved.

### BRIEF DESCRIPTION OF THE DRAWINGS

To make the technical solutions provided in the embodiments of the disclosure or the related art more clearly illustrated, several accompanying drawings required by the embodiments or the related art for description are briefly introduced as follows. Obviously, the drawings in the following description are some embodiments of the disclosure, and for a person having ordinary skill in the art, other drawings can be obtained based on these drawings without an inventive effort.
FIG. 1 illustrates a perspective view of inner plastic according to the related art.
FIG. 2 illustrates a surface of the inner plastic facing an electrode assembly according to the related art.
FIG. 3 illustrates a schematic view when an electronic apparatus is a vehicle according to an embodiment of this disclosure.
FIG. 4 illustrates a perspective view of a secondary battery according to an embodiment of the disclosure.
FIG. 5 illustrates a top view of the secondary battery.
FIG. 6 illustrates a cross-sectional view taken along a line AA in FIG. 5.
FIG. 7 and FIG. 8 illustrate enlarged views of portions on a side where an electrode terminal is located in FIG. 6.
FIG. 9 illustrates one side of a top surface of the inner plastic according to a first embodiment of the disclosure.
FIG. 10 illustrates a cross-sectional view taken along a line BB in FIG. 9.
FIG. 11 illustrates one side of a bottom surface of the inner plastic according to the first embodiment of the disclosure.
FIG. 12 illustrates one side of the top surface of the inner plastic according to a second embodiment of the disclosure.
FIG. 13 illustrates a cross-sectional view taken along a line CC in FIG. 12.
FIG. **14** illustrates one side of the bottom surface of the inner plastic according to the second embodiment of the disclosure.
FIG. 15 illustrates one side of the top surface of the inner plastic according to a third embodiment of the disclosure.
FIG. 16 illustrates a cross-sectional view taken along a line DD in FIG. 15.
FIG. 17 illustrates an enlarged view of a region E in FIG. 15.
FIG. 18 illustrates one side of the bottom surface of the inner plastic according to the third embodiment of the disclosure.
FIG. 19 illustrates an enlarged view of a region F in FIG. 18.
FIG. 20 illustrates one side of the top surface of the inner plastic according to a fourth embodiment of the disclosure.
FIG. 21 illustrates one side of the bottom surface of the inner plastic according to the fourth embodiment of the disclosure.
FIG. 22 illustrates a current-collecting plate according to an embodiment of the disclosure.
FIG. 23 illustrates a partially unfolded first tab according to an embodiment of the disclosure.

### DESCRIPTION OF THE EMBODIMENTS

For a better understanding of the spirit of the embodiments of this disclosure, further explanations are provided below together with some preferred embodiments of the disclosure.

The embodiments of this disclosure are to be described in detail in the following paragraphs. Throughout the specification of the disclosure, similar or like components and components with similar or like functions are represented by similar reference numerals. The embodiments related to the drawings described herein are illustrative, graphical, and provided for a basic understanding of the disclosure. The embodiments of the disclosure should not be interpreted as limitations of the disclosure.

As used herein, the terms "substantially", "generally", "essentially", and "approximately" are used to describe and explain small variations. When used together with an event or circumstance, these terms may refer to examples where the event or circumstance occurs precisely as well as examples where the event or circumstance occurs very approximately.

In the specification, unless specifically designated or limited, relative terms such as: "central", "longitudinal", "lateral", "front", "rear", "right", "left", "internal", "external", "lower", "higher", "horizontal", "vertical", "above", "below", "upper", "lower", "top", "bottom", and their derivatives (such as "horizontally", "downwardly", "upwardly", etc.) shall be interpreted as referring to the orientation described in the discussion or shown in the drawings. These relative terms are used only for descriptive convenience and do not require that the disclosure be constructed or operated in a particular direction.

For ease of description, "first", "second", "third", etc. may be used herein to distinguish different components in one figure or a series of figures. "First", "second", "third" etc. are not intended to describe the corresponding components.

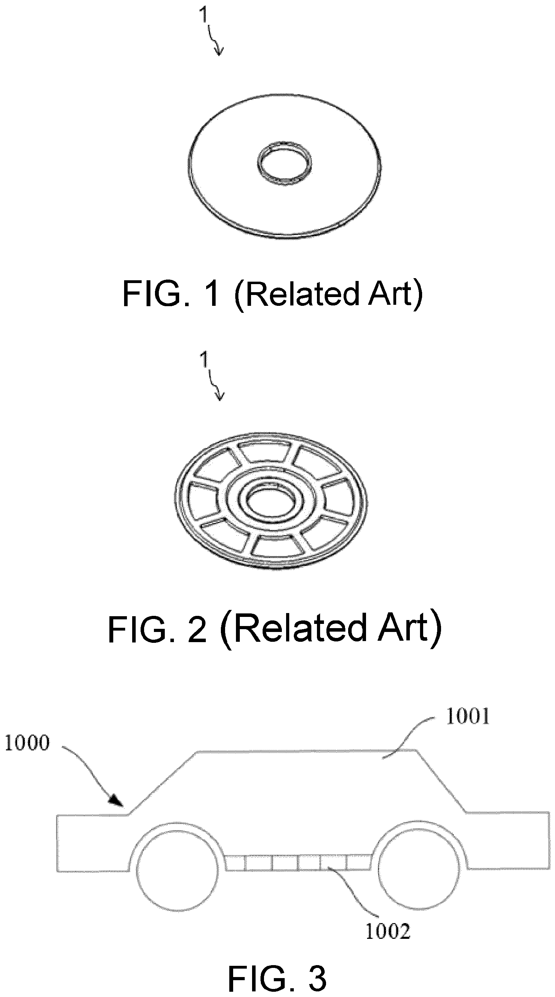

FIG. 1 illustrates a perspective view of inner plastic 1 according to the related art, where a surface facing a housing (material generally being steel) is illustrated, and the surface is a flat surface. FIG. 2 illustrates a surface of the inner plastic 1 facing an electrode assembly (JR) according to the related art. An assembly process of a secondary battery includes the following. The inner plastic 1 is placed into the housing, an electrode terminal (material generally being aluminum) is then assembled onto the inner plastic 1 and the housing, and the electrode terminal is riveted to secure the inner plastic 1 to the housing. During the riveting process, the electrode terminal may compress the inner plastic 1 radially, causing an edge of the inner plastic 1 to possibly press against the housing. That is, a center of the inner plastic 1 receives a radially outward force, while the edge of the inner plastic 1 receives a radially inward force, so a portion of the inner plastic 1 is deformed downward with a recess. The inner plastic 1 is a solid sheet. At the deformed location, an accommodating cavity that accumulates electrolyte may be easily formed. During a liquid injection process, the secondary battery is placed with the electrode terminal facing downward, and liquid is injected from an end of the secondary battery opposite to the electrode terminal. Herein, the inner plastic 1 is at the lowest position inside the housing, and the electrolyte may seep between the inner plastic 1 and the housing, so corrosion to the housing occurs due to electrolyte accumulation. Due to the deformation and the recess in the inner plastic 1, more electrolyte accumulates between the inner plastic 1 and the housing. After the secondary battery has been used for a period of time, concentrated liquid-phase corrosion of the housing may occur.

The disclosure provides an electronic apparatus 1000. For the convenience of explanation, in the following embodiments, the electronic apparatus 1000 is treated as a vehicle for explanation. Referring to FIG. 3, a battery pack 1002 is disposed inside the vehicle, and the battery pack 1002 may be disposed at a bottom portion, a front portion, or a rear portion of a vehicle body 1001. The battery pack 1002 may be used for power supply to the vehicle, for example, the battery pack 1002 may act as an operating power source of the vehicle. A working portion of the electronic apparatus 1000 is electrically connected to the battery pack 1002 to obtain power support. The vehicle may be but not limited to a fuel vehicle, a gas vehicle, or a new energy vehicle, and the new energy vehicle may be a pure electric vehicle, a hybrid vehicle, or a range-extended vehicle, etc. The working portion is the vehicle body, and the battery pack 1002 is arranged at the bottom portion of the vehicle body and provides electrical energy support for the driving of the vehicle or the operation of electrical components in the vehicle. However, in other embodiments, the electronic apparatus 1000 may be a mobile phone, a portable apparatus, a notebook computer, a ship, a spacecraft, an electric toy, an electric tool, etc. The spacecraft includes but not limited to an airplane, a rocket, a space shuttle, a spaceship, etc. The working portion may be a unit component that can obtain the electric energy of the battery pack 1002 and perform corresponding work, such as a blade rotating unit of a fan, a dust collection working unit of a vacuum cleaner, etc. The electric toy includes but not limited to a stationary or mobile electric toy, for example, a game machine, an electric car toy, an electric boat toy, an electric airplane toy, etc. The electric tool includes a metal cutting electric tool, a grinding electric tool, an assembling electric tool, and an electric tool for railway use, such as an electric drill, an electric grinder, an electric wrench, an electric screwdriver, an electric hammer, an impact drill, a concrete vibrator, an electric planer, etc. The above electronic apparatus 1000 is not particularly limited in the embodiments of the disclosure.

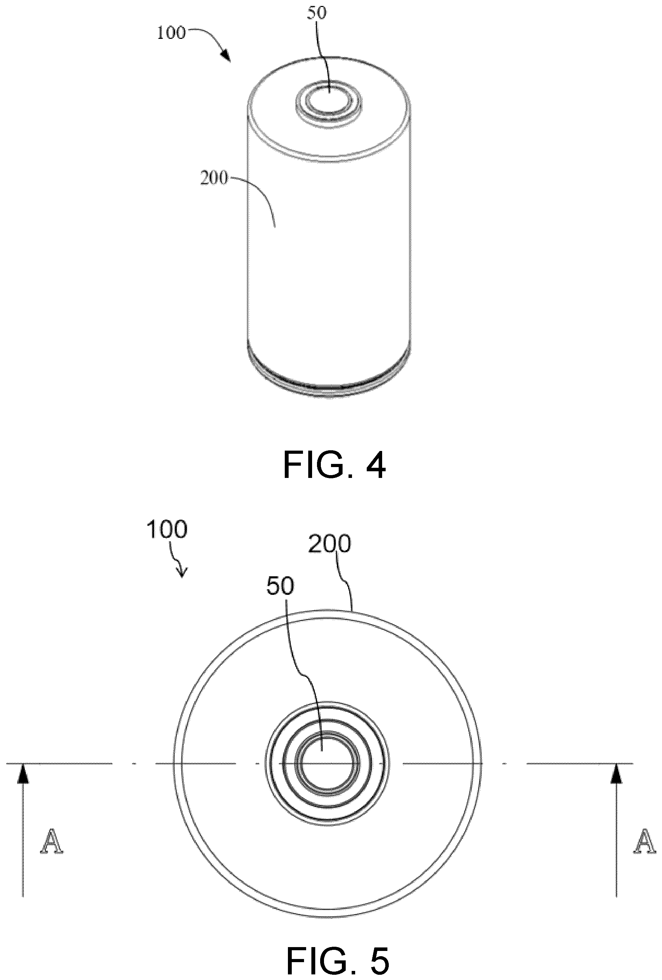

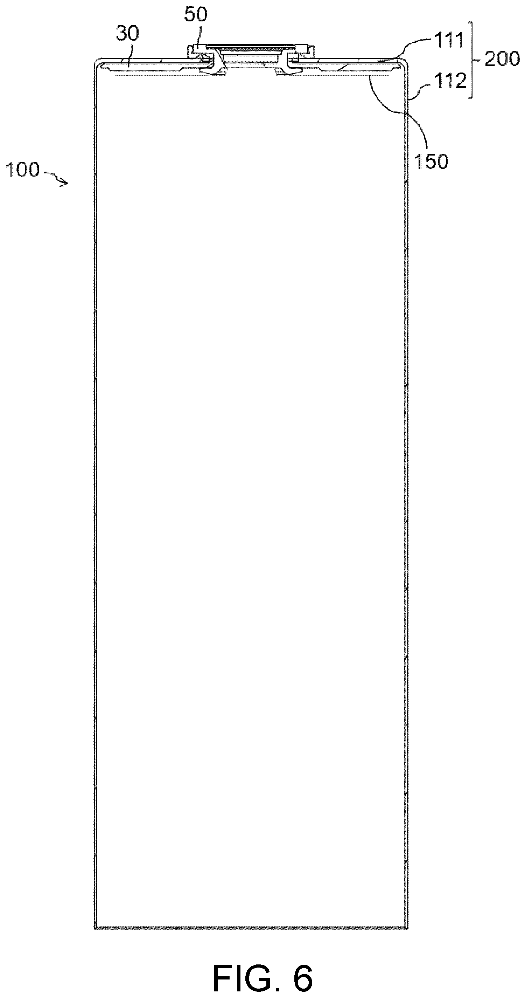

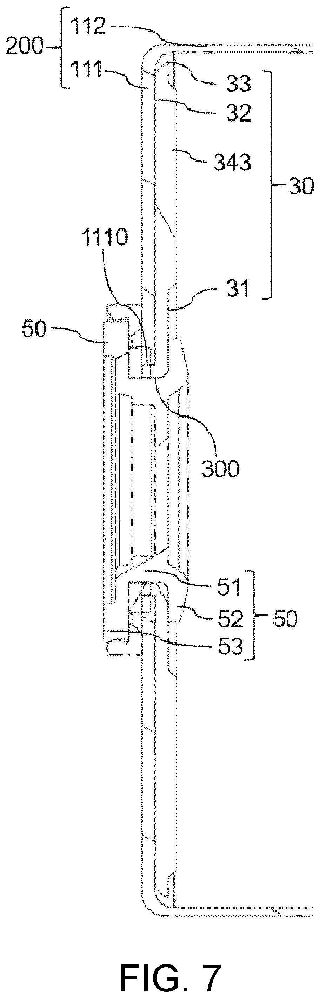

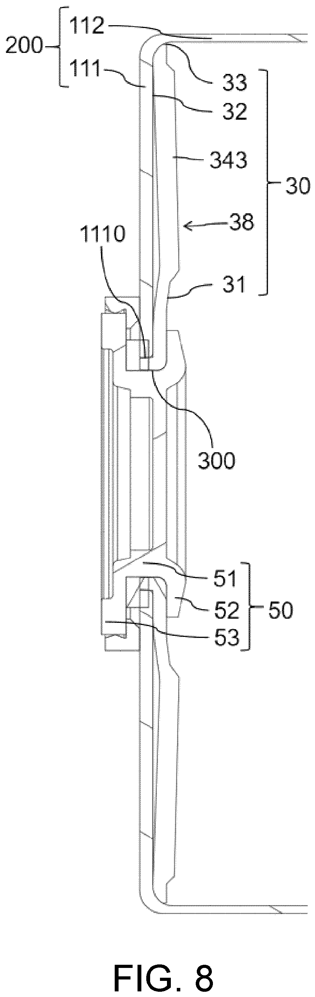

FIG. 4 illustrates a perspective view of a secondary battery 100 according to an embodiment of the disclosure. FIG. 5 illustrates a top view of the secondary battery 100. FIG. 6 illustrates a cross-sectional view taken along a line AA in FIG. 5, where the electrode assembly and other components inside the housing 200 are omitted, and the AA line cuts through a third reinforcing rib 343, so a through channel 35 on inner plastic 30 is not shown in FIG. 6. FIG. 7 and FIG. 8 illustrate enlarged views of portions on a side where an electrode terminal 50 is located in FIG. 6, where FIG. 8 illustrates a schematic view of the inner plastic 30 after being deformed due to compression from the electrode terminal 50 and the housing 200. The embodiments of the disclosure provide the secondary battery 100 including the housing 200, the inner plastic 30 located inside the housing 200, the electrode assembly, a current-collecting plate 150, and the electrode terminal 50 assembled on the housing 200 and the inner plastic 30. The housing 200 includes an end wall 111 and a side wall 112 surrounding the end wall 111, the end wall 111 has a first assembly hole 1110. The inner plastic 30 is in contact with a surface of the end wall 111 facing an inner portion of the housing 200, and the inner plastic has a second assembly hole 300 corresponding to the first assembly hole 1110. The electrode terminal 50 includes an outer flange 53, a post portion 51, and an inner flange 52. The outer flange 53 is located on the outside of the housing 200, and the post portion 51 passes through the first assembly hole 1110 and the second assembly hole 300. The post portion 51 of the electrode terminal 50 is connected to an end of the outer flange 53 outside the housing 200, and the inner flange 52 is connected to an end of the outer flange 53 inside the housing 200. The inner flange 52 and the end wall 111 clamp the inner plastic 30 together. The inner flange 52 of the electrode terminal 50 is in contact with a surface of the inner plastic 30 facing the electrode assembly/a surface away from the end wall 111 (hereinafter referred to as a top surface 31) and fixes the inner plastic 30 to an inner side surface of the end wall 111 facing the inner portion of the housing 200.

As long as a stable sealing and electrical connection relationship can be formed, the connection between the end wall 111 and the side wall 112 may be achieved in a variety of ways, such as integral stamping, integral casting, or separate welding. The surrounding of the side wall 112 is not limited and may be in the form of a circular cylinder shape or a prismatic cylinder shape, or the side wall may also surround the end wall along any other closed loop contour that can be matched with the end wall. An accommodating cavity is formed inside the housing 200 for accommodating the electrode assembly, electrolyte, the inner plastic 30, the current-collecting plate 150, and other necessary battery components. Specifically, a diameter of the housing 200 may be determined according to a specific size of the electrode assembly. The housing 200 can be made of various materials, such as copper, iron, aluminum, steel, aluminum alloy, etc. In order to prevent the housing 200 from rusting during long-term use, a surface of the housing 200 may also be plated with a layer of anti-rust material such as metal nickel. The secondary battery 100 may be a cylindrical battery, for example, a 4680 cylindrical battery with a height of 80 mm and a diameter of 46 mm, or for example, with a height of 15 mm and a diameter of 46 mm.

The electrode assembly is the component where electrochemical reactions occur in the secondary battery 100. The housing 200 may contain one or a plurality of terminal assemblies. Each electrode assembly is a wound or stacked electrode assembly and includes a laminated and/or wound positive terminal sheet, a first separator, a negative terminal sheet, and a second separator. The positive terminal sheet includes a positive current collector and a positive active material layer coated on the positive current collector. A first coated region coated with the positive active material layer and a first uncoated region without the positive active material layer are formed on the positive current collector. The first coated region and the first uncoated region are arranged in a height direction of the electrode assembly. The first uncoated region extends beyond the separator towards one end in a height direction of the secondary battery 100 and forms a bent positive tab. The negative terminal sheet includes a negative current collector and a negative active material layer coated on the negative current collector. A second coated region coated with the negative active material layer and a second uncoated region without the negative active material layer are formed on the negative current collector. The second coated region and the second uncoated region are arranged in the height direction of the electrode assembly. The second uncoated region extends beyond the separator as well towards one end in the height direction of the secondary battery 100 and forms a bent negative tab. The first separator and the second separator are arranged between the positive terminal sheet and the negative terminal sheet to isolate the positive active material layer from the negative active material layer. Taking a lithium-ion secondary battery 100 as an example, a material of the positive current collector may be aluminum, and the positive active material layer includes a positive active material, which may be lithium cobalt oxide, lithium iron phosphate, ternary lithium, or lithium manganese oxide, etc. A material of the negative electrode current collector may be copper. The negative active material layer includes a negative active material, which may be carbon or silicon, etc. A base material of the first separator and the second separator may be polypropylene (PP) or polyethylene (PE), etc. In order to protect and insulate the electrode assembly, the electrode assembly may also be covered with an insulating film, and the insulating film may be made of PP, PE, PET, PVC, or other polymer materials.

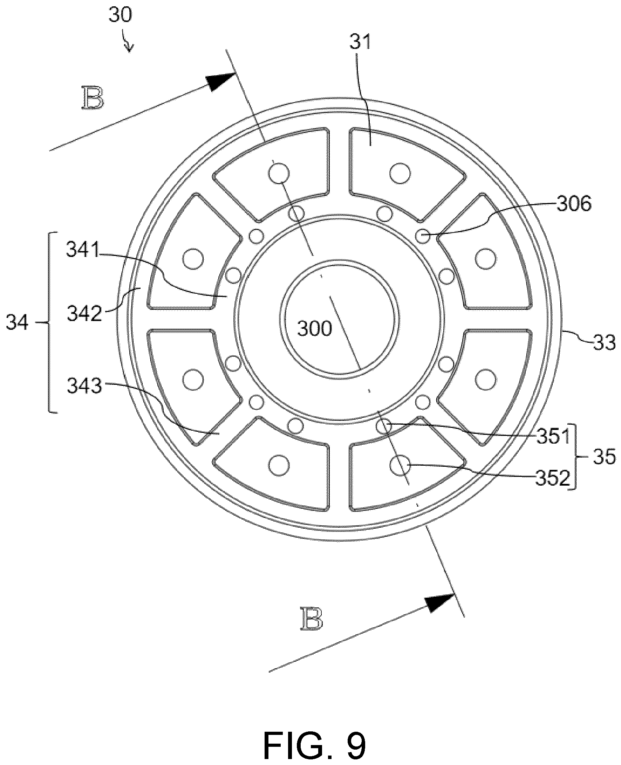

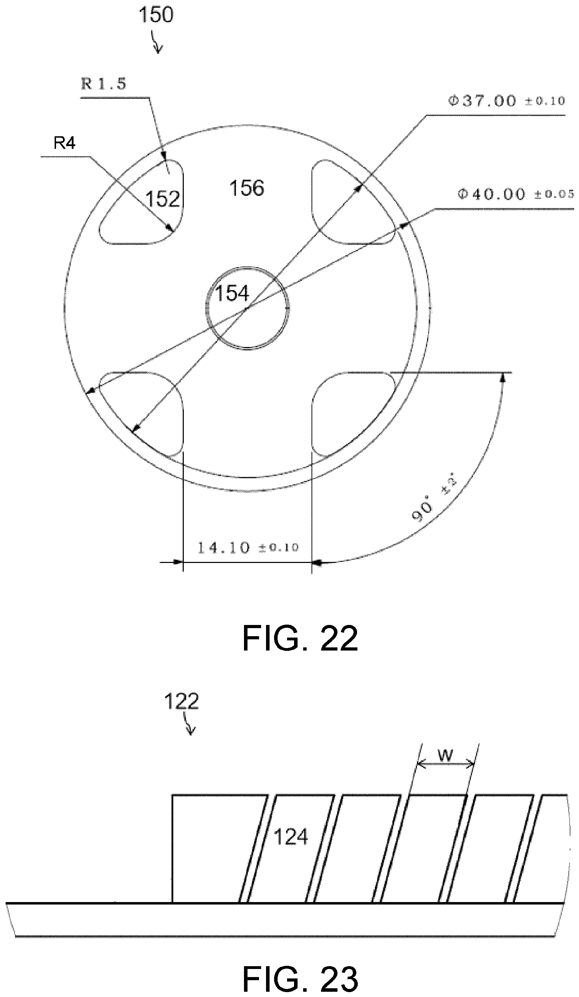

FIG.9 to FIG.11, FIG.12 to FIG.14, FIG.15 to FIG.19, and FIG.20 to FIG.21 illustrate the inner plastic 30 according to a first embodiment to a fourth embodiment of the disclosure. FIG. 22 illustrates a current-collecting plate according to an embodiment of the disclosure. FIG. 23 illustrates the partially unfolded first tab 122 according to an embodiment of the disclosure. The current-collecting plate 150 is located between the electrode assembly and the inner plastic 30 and is connected to the electrode terminal 50 and the first tab 122 of the electrode assembly. A size of the current-collecting plate 150 may be as shown in FIG.22, where the size unit other than angles is mm.

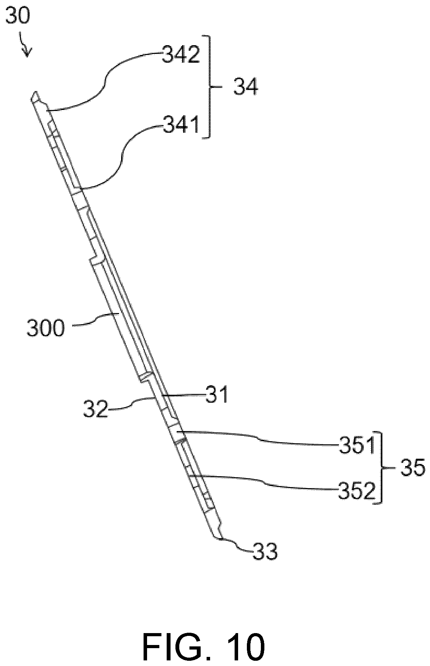

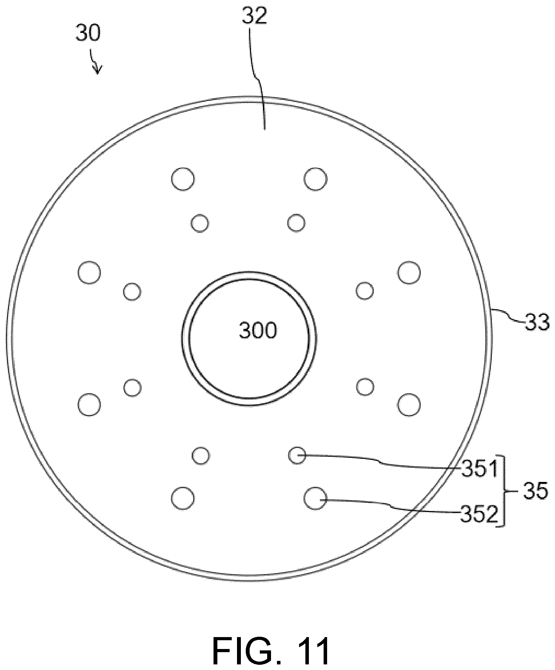

FIG. 9 illustrates one side of the top surface 31 (facing the electrode assembly) of the inner plastic 30 according to the first embodiment of the disclosure. FIG. 10 illustrates a cross-sectional view taken along a line BB in FIG. 9. FIG.11 illustrates one side of the surface of the inner plastic 30 facing the end wall 111/surface away from the electrode assembly (hereinafter referred to as a bottom surface 32) according to the first embodiment of the disclosure. In the embodiments of the disclosure, the inner plastic 30 is provided with the through channel 35 that passes through the inner plastic 30 itself in its thickness direction (i.e., from the top surface 31 of the inner plastic 30 to the bottom surface 32) and capable of timely discharging the electrolyte located between the inner plastic 30 and the housing 200 when the inner plastic 30 is deformed by the compression of the inner flange 52 of the electrode terminal 50 and the housing 200. The electrolyte is thus prevented from accumulating between the inner plastic 30 and the housing 200 and causing concentrated corrosion to the housing 200. The safety of the secondary battery 100 is thereby improved.

The through channel 35 may be a through hole (also referred to as a leakage hole) formed during injection molding, and the through hole has at least one circumference. For instance, the through channel includes a plurality of first through holes 351 surrounding the second assembly hole 300 and a plurality of second through holes 352 surrounding the plurality of first through holes 351. Diameters of the first through holes 351 and the second through holes 352 may range from 0.3 mm to 5.0 mm, preferably from 1.0 mm to 3.0 mm. Further, the first through holes 351 and the second through holes 352 are not limited to the illustrated cylindrical shape, and their projected shapes may also be rectangular, racetrack-shaped, parallelogram, or other irregular shapes. The diameter of the first through holes 351 may be different from that of the second through holes 352. When the diameter of the first through holes 351 is less than that of the second through holes 352, an overall structure of the inner plastic 30 is prevented from being excessively weak due to large holes in an inner circle. On the other hand, the second through holes 352 are exposed to a weight-reducing hole 152 of the current-collecting plate 150 shown in FIG.22. Therefore, the diameter of the second through holes 352 may be smaller. FIG.23 illustrates a schematic view of a plurality of bendable conductive sheets 124 of the first tab 122 when being unfolded. After the electrode sheets are wound, all the conductive sheets 124 are bent toward an axis of the electrode assembly. The diameter of the second through holes 352 is less than a width w of any conductive sheet 124 at an end near the axis of the electrode assembly, so that the first tab 122 is prevented from extending into the second through holes 352 and contacting the end wall 111. Therefore, the diameter of the second through holes 352 may also be less than that of the first through holes 351. In some embodiments, the second through holes 352 may be arranged to avoid the weight-reducing hole 152. When being projected in the thickness direction of the inner plastic 30, that is, when being projected in the direction from the bottom surface 32 to the top surface 31 of the inner plastic 30, the through channel 35 of the inner plastic 30 is misaligned with the weight-reducing hole 152. In other embodiments, the through holes may be set so that the diameter of part of the through holes on the top surface 31 side exposed to the weight-reducing hole 152 is less than the width w, while the diameter of the through holes not exposed to the weight-reducing hole 152 may be slightly greater, for example, it may be greater than the width w, to better discharge the electrolyte between the inner plastic 30 and the end wall 111.

The inner plastic 30 includes a protruding reinforcing rib 34 on the top surface 31 facing the electrode assembly. The reinforcing rib 34 may include a first reinforcing rib 341 surrounding the second assembly hole 300, a second reinforcing rib 342 surrounding the first reinforcing rib 341, and a third reinforcing rib 343 communicating with the first reinforcing rib 341 and the second reinforcing rib 342. This means that the inner plastic 30 is thicker where the reinforcing rib 34 is located and thinner in other parts, so that the inner plastic 30 can provide insulation while reducing weight as much as possible. The position with the reinforcing rib 34 is thicker, so greater hardness is provided compared to other portions. When the inner plastic 30 is compressed by the electrode terminal 50 and an outer edge 33 abuts against the side wall 112 and deforms, the portion with the reinforcing rib 34 is less likely to deform. The portions on both sides of the reinforcing rib 34 are thinner and softer. After the inner plastic 30 deforms, a recessed portion 38 is typically located at the position of the reinforcing rib 34 as shown in FIG. 8. That is, when the secondary battery 100 is placed in the direction shown in FIG. 6, the position of the reinforcing rib 34 is the lowest, and the bottom surface 32 of the inner plastic 30 at the recessed portion 38 is recessed toward the top surface 31. In other words, at the recessed portion 38, the surface of the inner plastic 30 facing the end wall 111 is recessed toward the inner portion of the housing 200. Arranging the through channel 35 to pass through the recessed portion 38 may better discharge the electrolyte accumulated between the inner plastic 30 and the end wall 111. Referring to FIG. 9, the first through holes 351 are arranged on the first reinforcing rib 341, and the second through holes 352 are arranged in a region surrounded by the first reinforcing rib 341, the second reinforcing rib 342, and the third reinforcing rib 343. The number of the first through holes 351 and the second through holes 352 may be between 1 and 16. In other embodiments, when injecting to form the inner plastic 30, a groove may be actively formed on the bottom surface 32 of the inner plastic 30. That is, the recessed portion 38 exists before the inner plastic 30 is compressed and deformed, to actively concentrate the electrolyte into the recessed portion 38, and together with the through channel arranged at the recessed portion 38, the electrolyte is drained and thus may be easily discharged.

Referring to FIG. 9, a plastic inlet hole 306 is arranged at the position where the first reinforcing rib 341 is connected to the third reinforcing rib 343. The plastic inlet hole 306 is a non-penetrating blind hole, and its projection shape may be circular as shown in FIG. 9 or may be rectangular. The plastic inlet hole 309 and the first through hole 351 do not overlap. The number of plastic inlet holes 306 may be four as shown in the figure, or three or other numbers. During injection molding, plastic injection is performed at the position of the plastic inlet hole 306. The plastic inlet hole 306 is arranged on the reinforcing rib 34 and is arranged at the position where the first reinforcing rib 341 is connected to the third reinforcing rib 343. This is because during plastic injection, the molten plastic extends from the plastic inlet hole 306 to the surroundings and flows from high to low positions. The position of the plastic inlet hole 306 communicates with to the highest positions of the first reinforcing rib 341, the second reinforcing rib 342, and the third reinforcing rib 343, so the formation of the reinforcing rib 34 is not affected. The plastic inlet hole 306 is separated from the first through hole 351, and a distance therebetween is greater than 0.5 mm because an injection mold has a protrusion at the position corresponding to the first through hole 351. If it is excessively close to the plastic inlet hole 306, the flow of the plastic may be affected.

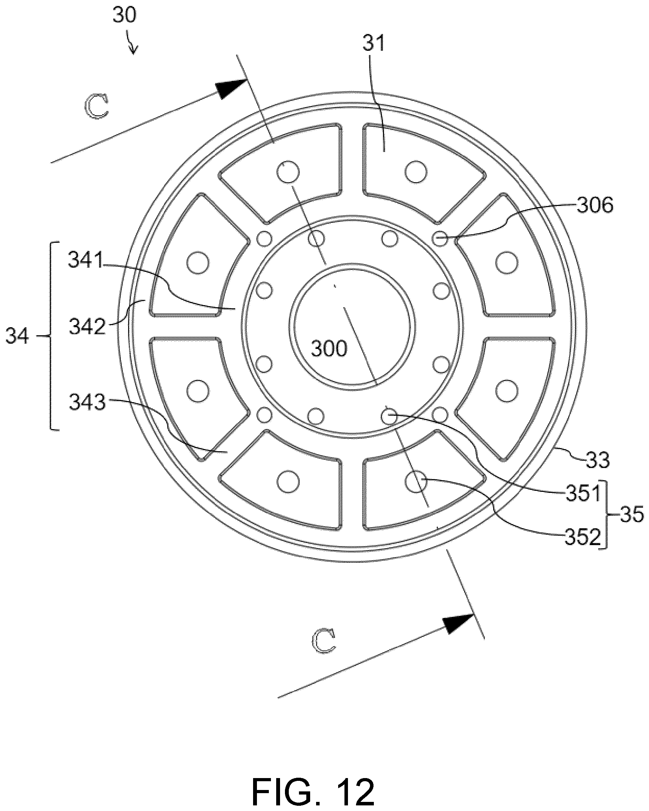

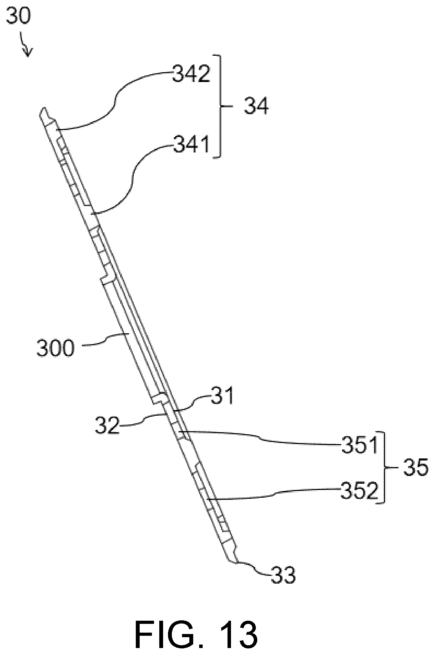

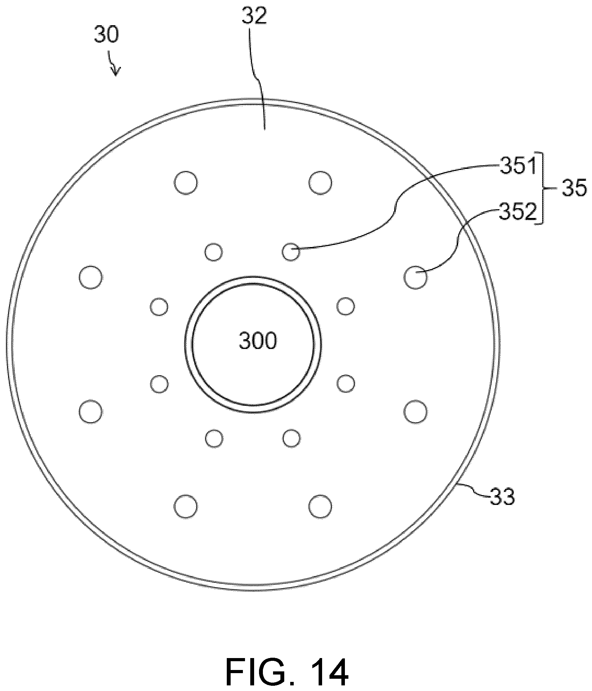

FIG. 12 illustrates one side of the top surface 31 (facing the electrode assembly)) of the inner plastic 30 according to a second embodiment of the disclosure. FIG. 13 illustrates a cross-sectional view taken along a line CC in FIG. 12. FIG. 14 illustrates one side of the bottom surface 32 (facing the end wall 111) of the inner plastic 30 according to the second embodiment of the disclosure. The difference from the first embodiment lies in that the first through hole 351 is arranged between the reinforcing rib 34 and the second assembly hole 300.

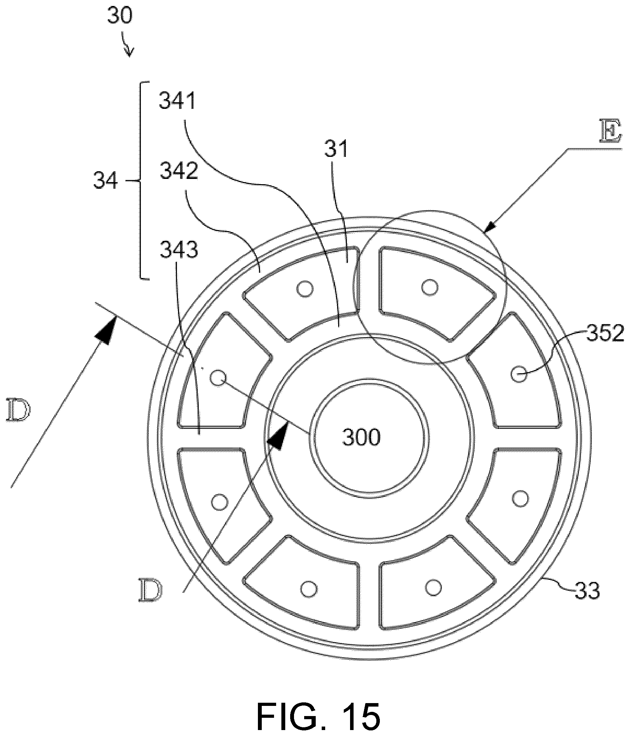

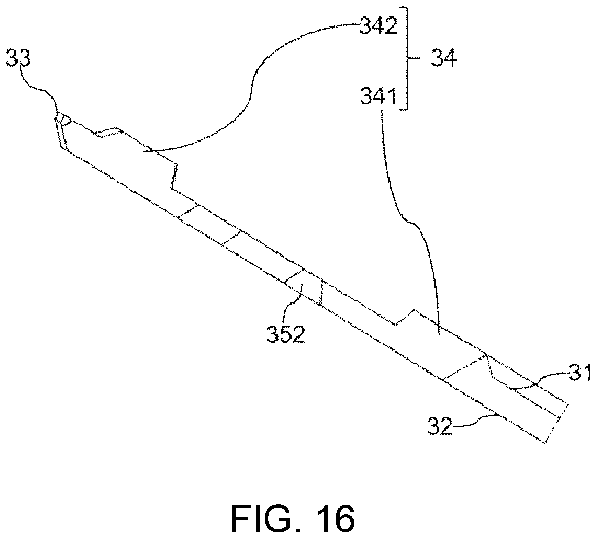

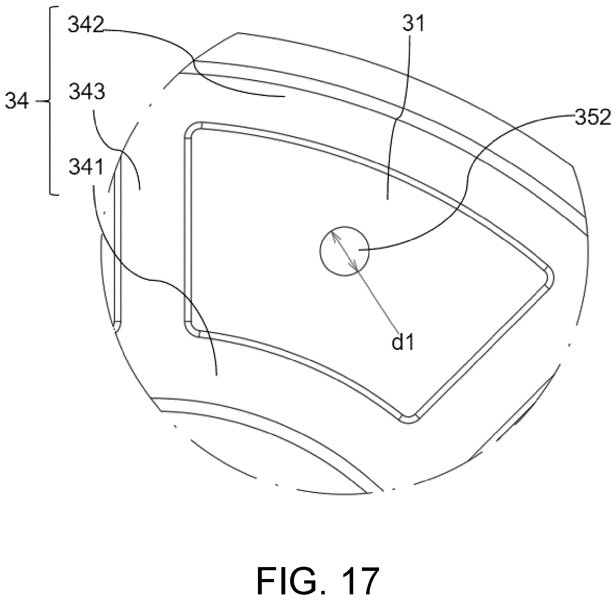

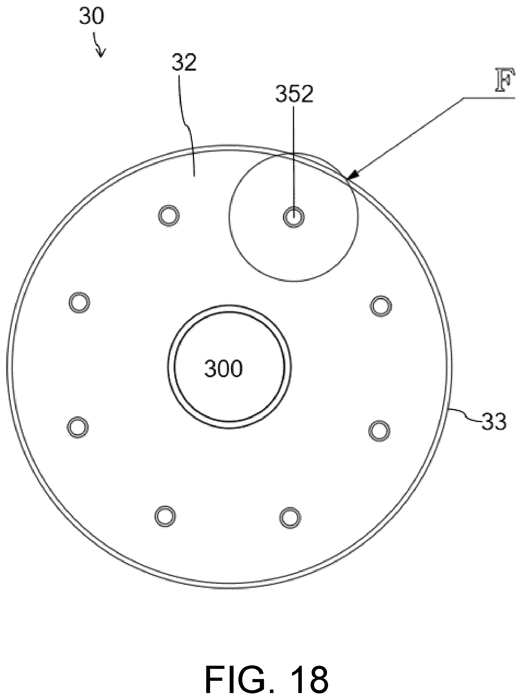

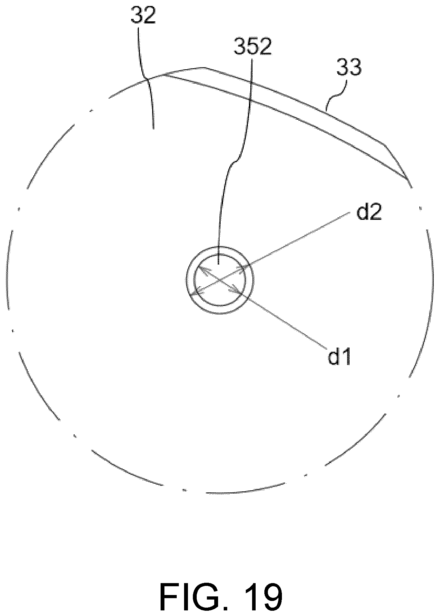

FIG. 15 illustrates one side of the top surface 31 (facing the electrode assembly) of the inner plastic 30 according to a third embodiment of the disclosure. FIG. 16 illustrates a cross-sectional view taken along a line DD in FIG. 15. FIG. 17 illustrates an enlarged view of a region E in FIG. 15. FIG. 18 illustrates one side of the bottom surface 32 (facing the end wall 111) of the inner plastic 30 according to the third embodiment of the disclosure. FIG. 19 illustrates an enlarged view of a region F in FIG. 18. The common features of the first to third embodiments include that their second through holes 352 are all located in a "hollowed-out" region surrounded by the first reinforcing rib 341, the second reinforcing rib 342, and the third reinforcing rib 343. Even though there is no reinforcing rib 34 in this region, due to being completely surrounded by the harder reinforcing rib 34, the overall strength is also greater and not prone to deformation. Therefore, also located at the recessed portion 38, the arrangement of the second through hole 352 in this region helps to discharge the electrolyte between the recessed portion 38 and the end wall 111.

Compared to the first embodiment and the second embodiment, one of the differences in the third embodiment is that the third embodiment does not include the first through hole 351. Another difference is that while the diameter of the through holes in the first embodiment and the second embodiment remains constant, in the third embodiment, the diameter of the second through hole 352 varies, with a first diameter d1 on the top surface 31 side (i.e., the side facing the electrode assembly) being less than a second diameter d2 on the bottom surface 32 side (i.e., the side facing the end wall). In other words, the second through hole 352 is funnel-shaped, which enlarges the electrolyte discharge channel between the end wall 111 and the inner plastic 30, so that the electrolyte may be easily discharged from between the end wall 111 and the inner plastic 30, facilitating the circulation of the electrolyte.

The funnel-shaped second through hole 352 also makes demolding more convenient. The protrusion of the injection mold corresponding to the second through hole 352 is a truncated cone shape with a larger bottom dimension and a smaller end dimension, rather than a cylindrical shape with a consistent diameter, so the inner plastic 30 may be easily separated from the injection mold.

In addition, the first diameter d1 of the second through hole 352 on the side facing the electrode assembly is less than the width w of the conductive sheet 124 at the end near the axis of the electrode assembly as shown in FIG. 23. The most important function of the inner plastic 30 is insulation. If the first diameter d1 is excessively large, foreign objects may enter the inner plastic 30, and the insulation effect may thus be affected. The first tab 122, for example, is a positive tab. The current-collecting plate 150 shown in FIG. 22 is a positive current-collecting plate and is provided with 4 weight-reducing holes 152 for weight reduction. The current-collecting plate 150 also includes an electrode terminal welding portion 154 and a tab welding portion 156 located around the electrode terminal welding portion 154, and the tab welding portion 156 is welded to the first tab 122. The top surface 31 of the inner plastic 30 directly faces the current-collecting plate 150 and directly faces the first tab 122 at the position of the weight-reducing holes 152, which means that a portion of the first tab 122 is exposed and is not covered by the current-collecting plate 150. FIG. 23 illustrates the unfolded individual sheets of the first tab 122. The value of the width w of each conductive sheet 124 ranges from 3 mm to 4 mm. A slit between the first tabs 122 is 0.5 mm, the height of each first tab 122 is 6.5±0.7 mm, and the first tab 122 is inclined at 15°. When the secondary battery 100 is cycled, the electrode assembly generates gas, causing outward swelling, which may cause the portion of the first tab 122 exposed at the weight-reducing holes 152 to warp towards the inner plastic 30. If the first diameter d1 of the second through hole 352 on the side facing the electrode assembly is greater than the width of the first tab 122, the first tab 122 may penetrate into the second through hole 352, causing the first tab 122 to possibly contact the negatively charged end wall 111, and a short circuit of the secondary battery 100 may thus occur. The first diameter d1 of the second through hole 352 on the side facing the electrode assembly being less than the width w of the conductive sheet 124 at the end near the axis of the electrode assembly may avoid the above short circuit situation.

In some embodiments, the difference between the first diameter d1 and the second diameter d2 of the funnel-shaped second through hole 352 ranges from 0.03 mm to 4 mm, for example, 0.03 mm to 0.5 mm, 0.2 mm to 4.0 mm, and 1.0 mm to 2.0 mm. Further, the first through hole 351 and the second through hole 352 in the first embodiment and the second embodiment may also be configured as the funnel-shaped holes similar to that in the third embodiment.

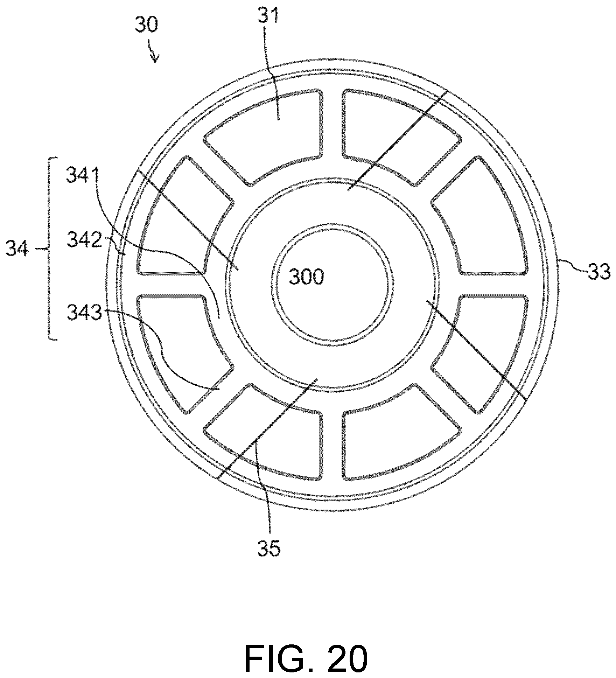

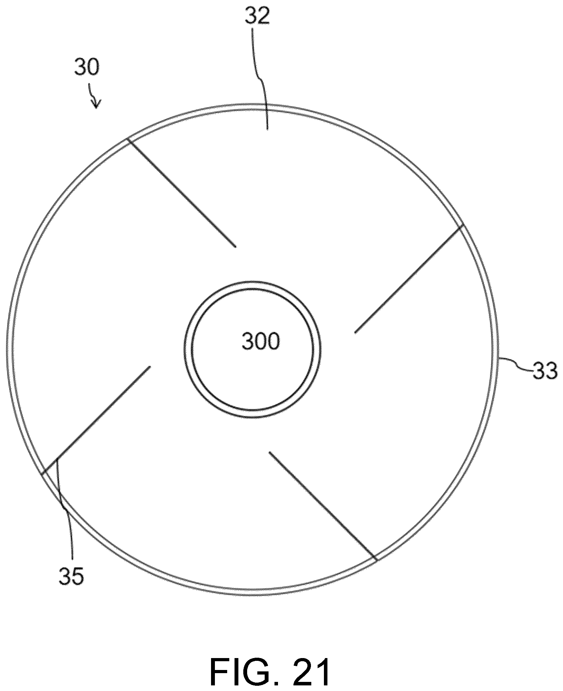

FIG. 20 illustrates one side of the top surface 31 (facing the electrode assembly) of the inner plastic 30 according to a fourth embodiment of the disclosure. FIG. 21 illustrates one side of the bottom surface 32 (facing the end wall 111) of the inner plastic 30 according to the fourth embodiment of the disclosure. In the fourth embodiment, the through channel 35 includes a plurality of slots. The slots at least break part of the material of the inner plastic 30, for example, passing through both the first reinforcing rib 341 and the second reinforcing rib 342 and may extend all the way to the outer edge of the inner plastic 30. The slots may be formed after injection molding, such as cutting or shearing the slots on the completed injection molded inner plastic 30. The through holes of the first to third embodiments reduce the material of the inner plastic 30 compared to the slots of the fourth embodiment, so a weight of the inner plastic 30 is further reduced. The slots may also discharge the electrolyte located between the inner plastic 30 and the end wall 111. The number of the slots is not limited to four as shown in the figure, and the number of the slots may be any number from 1 to 16. The number of the slots may be adjusted according to the size of the secondary battery 100, so that the leakage effect is improved, and insulation is also provided. Similar to the first to third embodiments, the slots may also be arranged to avoid the weight-reducing holes 152 of the current-collecting plate 150, to avoid the first tab 122 extending into the slots and contacting the end wall 111 causing a short circuit. That is, the number and position of the slots may also be adjusted according to the number and position of the weight-reducing holes 152 of the current-collecting plate 150.

In the embodiment of the disclosure, the inner plastic 30 is provided with the through channel 35 that passes from the top surface 31 of the inner plastic 30 to the bottom surface 32, and the through channel 35 may be a through hole or a slot. When the inner plastic 30 is deformed due to compression from the inner flange 52 of the electrode terminal 50 and the housing 200, the through channel 35 discharges the electrolyte located between the inner plastic 30 and the housing 200 in a timely manner, so that the electrolyte is prevented from accumulating between the inner plastic 30 and the housing 200 and causing concentrated aggravated corrosion to the housing 200. The safety of the secondary battery 100 is thus improved.

The embodiments of the disclosure further provide a battery pack 1002 including the secondary battery 100 according to any one of the above, and the battery pack 1002 may exhibit the beneficial effects described above regarding the secondary battery 100.

The embodiments of the disclosure further provide an electronic apparatus 1000 including the battery pack 1002 described above, and the electronic apparatus 1000 may exhibit the beneficial effects described above regarding the secondary battery 100 and/or the battery pack 1002.

## Claims

1. A secondary battery (100), comprising:
a housing (200) comprising an end wall (111) and a side wall (112) surrounding the end wall (111), wherein the end wall (111) has a first assembly hole (1110);
inner plastic (30) in contact with a surface of the end wall (111) facing an inner portion of the housing (200) and having a second assembly hole (300) corresponding to the first assembly hole (1110); and
an electrode terminal (50) comprising a post portion (51) and an inner flange (52), wherein the post portion (51) passes through the first assembly hole (1110) and the second assembly hole (300), and the inner flange (52) is connected to one end of the post portion (51) located inside the housing (20) and clamps the inner plastic (30) together with the end wall (111),
wherein in a thickness direction of the inner plastic (30), the inner plastic (30) is provided with a through channel (35) passing through the inner plastic (30) itself.

2. The secondary battery (100) according to claim 1, wherein a surface of the inner plastic (30) facing the end wall (111) comprises a recessed portion (38) that is recessed toward the inner portion of the housing (200), and the through channel (35) passes through the recessed portion (38).

3. The secondary battery (100) according to claim 1, wherein a surface of the inner plastic (30) away from the end wall (111) has a reinforcing rib (34) arranged around the second assembly hole (300), and the through channel (35) is arranged on the reinforcing rib (34).

4. The secondary battery (100) according to claim 3, wherein the through channel (35) comprises a plurality of through holes arranged on the reinforcing rib (34), the inner plastic (30) further comprises a non-penetrating plastic inlet hole (306) arranged on the reinforcing rib (34), and a distance between each through hole and the plastic inlet hole (306) is greater than 0.5 mm.

5. The secondary battery (100) according to claim 1, further comprising:
an electrode assembly located in the housing (200), wherein a first tab (122) of the electrode assembly faces the inner plastic (30), wherein the first tab (122) comprises a plurality of independently bendable conductive sheets (124), and the plurality of conductive sheets (124) are all bent toward an axis of the electrode assembly,
the through channel (35) is a through hole having a first diameter facing a side of the electrode assembly and a second diameter facing a side of the end wall (111), the first diameter is less than the second diameter, and the first diameter is less than a width of any one of the conductive sheets (124) at one end close to the axis of the electrode assembly.

6. The secondary battery (100) according to claim 1, further comprising:
an electrode assembly and a current-collecting plate (150) located in the housing (200), the current-collecting plate (150) is located between the electrode assembly and the inner plastic (30), and the current-collecting plate (150) is connected to the electrode terminal (50) and a first tab (122) of the electrode assembly,
the current-collecting plate (150) has a weight-reducing hole (152), and projected in a thickness direction of the inner plastic (30), the through channel (35) of the inner plastic (30) is misaligned with the weight-reducing hole (152).

7. The secondary battery (100) according to claim 1, wherein a surface of the inner plastic (30) away from the end wall (111) has a first reinforcing rib (341) surrounding the second assembly hole (300), a second reinforcing rib (342) surrounding the first reinforcing rib (341), and a third reinforcing rib (343) communicating with the first reinforcing rib (341) and the second reinforcing rib (342), and
the through channel (35) comprises a plurality of slots that pass through both the first reinforcing rib (341) and the second reinforcing rib (342).

8. The secondary battery (100) according to claim 1, wherein the through channel (35) comprises:
a plurality of first through holes (351) surrounding the second assembly hole (300); and
a plurality of second through holes (352) surrounding the plurality of first through holes (351), wherein a diameter of the first through holes (351) is different from a diameter of the second through holes (352).

9. The secondary battery (100) according to claim 8, wherein a diameter of the plurality of first through holes (351) is less than a diameter of the plurality of second through holes (352).

10. The secondary battery according to claim 8, wherein the plurality of second through holes (352) have a first diameter facing a side of the electrode assembly and a second diameter facing a side of the end wall (111), the first diameter is less than the second diameter.

11. A battery pack (1002), comprising the secondary battery (100) according to any one of claim 1 to claim 10.

12. An electronic apparatus (1000), comprising the battery pack (1002) according to claim 11.
